# EUROPÄISCHE PATENTSCHRIFT

(11) **EP 2 516 037 B1**
(45) Veröffentlichungstag und Bekanntmachung des Hinweises auf die Patenterteilung: **19.02.2014**
(21) Anmeldenummer: 10796327.4
(22) Anmeldetag: 10.12.2010
(51) Int. Cl.: B01D 46/10, B01D 46/00, B01D 46/52

(54) **FILTERELEMENT UND HERSTELLUNGSVERFAHREN**
FILTER ELEMENT AND PRODUCTION METHOD
ÉLÉMENT FILTRANT ET PROCÉDÉ DE PRODUCTION

(30) Priorität: 23.12.2009 DE 102009060214
(43) Veröffentlichungstag der Anmeldung: 31.10.2012
(73) Patentinhaber: Mahle International GmbH, 70376 Stuttgart (DE)
(72) Erfinder: WAIBEL, Hans, 71686 Remseck Aldingen (DE)
(74) Vertreter: BRP Renaud & Partner
(86) Internationale Anmeldenummer: PCT/EP2010/069336
(87) Internationale Veröffentlichungsnummer: WO 2011/076586

(56) Entgegenhaltungen:
- EP-A1- 1 813 342
- WO-A1-97/40917
- WO-A2-2010/117606
- US-A- 4 725 296
- US-A1- 2006 091 061

## Beschreibung

Die vorliegende Erfindung betrifft ein Filterelement, insbesondere zum Filtern von Gasen, mit den Merkmalen des Oberbegriffs des Anspruchs 1.

Aus der US 2006/0091061 A1 ist ein Filterelement bekannt, bei dem ein Tragrahmen ein Filtermedium geschlossen umlaufend seitlich dicht einfasst und bei dem eine Dichtung am Tragrahmen angeordnet ist und das Filtermedium geschlossen umlaufend seitlich einfasst, wobei der Tragrahmen bezüglich des Filtermediums ein separat hergestelltes Bauteil ist und an das Filtermedium angebaut ist,

Aus der EP 1 208 902 A1 ist ein Filterelement bekannt, das ein Filtermedium und einen Tragrahmen aufweist, der das Filtermedium geschlossen umlaufend seitlich dicht einfasst. Außerdem ist eine Dichtung vorgesehen, die am Tragrahmen angeordnet ist und die den Tragrahmen und somit auch das Filtermedium geschlossen umlaufend seitlich einfasst. Beim bekannten Filterelement ist der Tragrahmen an einer anströmseitigen Stirnseite des Filtermediums angeordnet, wobei er an einen entsprechenden Randbereich des Filtermediums angegossen ist. Der Tragrahmen besitzt ein nach außen offenes C-förmiges Profil. Die separat hergestellte Dichtung besitzt ein nach innen geöffnetes C-förmiges Profil und ist in den Tragrahmen eingesteckt.

Aus der DE 197 36 267 C1 ist ein weiteres Filterelement bekannt, bei dem die Dichtung direkt an das Filtermedium angespritzt ist, so dass auf einen zusätzlichen Tragrahmen verzichtet werden kann.

Aus der EP 1 813 342 A1 ist ein Wickelfilterelement bekannt, das von einem Tragrahmen mit Dichtung umgeben ist, der sich zwischen Antrömseite und Abströmseite befindet, so das er von beiden Stirnseiten beabstandet ist. Der Tragrahmen bestert aus Kunststoff oder Metall und die Dichtung ist mit dem RTAh-men verklebt. Alternativ können Dichtung und Tragrahmen als gemeinsames 2-K-Teil gegossen werden. Die separat hergestellte Kombiantion aus Dichtung und Tragrahmen wird ur Befestigung um das gewickelte Filtermedium gelegt, in der Höhe fixiert und mit einem Klebstoff an der Seitenfläche des Filtermediums befestigt, so dass sich ein umlaufender Tragrahmen bildet, der koaxial zur Wickelachse angeordnet ist. Die Dichtung weist dazu einerseits eine Kontaktfläche auf, die parallel zur Filterseitenfläche verläuft und die an dieser anliegt, andererseits ist eine V-förmige Nut zum Filtermedium gebildet, in der sich ein Klebstoffkeil bilden kann.

Aus der US 4 725 295 A ist ein rechteckiges Faltenfilter bekannt, das in einen separat ausgeführten Tragrahmen eingesetzt ist, der sich auch zwischen Anström- und Abströmseite erstreckt und dabei unmittelbar am Bahnenmaterial anliegt.

Weitere Filterelemente sind beispielsweise aus der US 2006/0090434 A1 und aus der US 2003/0177745 A1 bekannt.

Bei den bekannten Filterelementen ist die Position der Dichtung fest vorgegeben, so dass das jeweilige Filterelement nur in einem speziell dafür vorgesehenen, dazu komplementär ausgestalteten Filtergehäuse verwendet werden kann. Es besteht jedoch der Wunsch, gleiche Filterelemente in unterschiedlichen Filtergehäusen verwenden zu können, um so die Stückzahl für die Filterelemente zu vergrößern, was zu einer Reduzierung des Stückpreises führt.

Die vorliegende Erfindung beschäftigt sich mit dem Problem, für ein Filterelement der eingangs genannten Art bzw. für ein zugehöriges Herstellungsverfahren eine verbesserte Ausführungsform anzugeben, die sich insbesondere durch eine vereinfachte Anpassbarkeit an unterschiedliche Einbausituationen auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Tragrahmen als separates Bauteil zu konzipieren, das an das Filtermedium angebaut werden kann. Hierdurch wird zum einen die Möglichkeit geschaffen, die Anbauposition, also die Relativlage zwischen Tragrahmen und Filtermedium zu variieren, um eine Adaption an unterschiedliche Einbausituationen vornehmen zu können. Zum anderen kann auch der Tragrahmen in verschiedenen Modifikationen hergestellt werden, wodurch ebenfalls eine Adaption an unterschiedliche Einbausituationen möglich ist. Auch lassen sich gleiche Tragrahmen mit unterschiedlichen Filtermedien kombinieren. Insgesamt kann dadurch die Anpassung des Filterelements an unterschiedliche Filtergehäuse bzw. an unterschiedliche Einbausituationen vereinfacht werden.

Erfindungsgemäß ist dabei der Tragrahmen am Filtermedium ausschließlich zwischen einer Anströmseite und einer Abströmseite des Filtermediums positioniert. Hierdurch vereinfacht sich die Integration des Filterelements in ein passendes Filtergehäuse. Insbesondere kann der Tragrahmen dabei bezüglich einer Hauptdurchströmungsrichtung des Filtermediums sowohl zur Anströmseite als auch zur Abströmseite mit einem Abstand relativ zum Filtermedium positioniert sein.

Besonders vorteilhaft ist dabei die Möglichkeit, den Tragrahmen während der Herstellung entlang des Filtermediums verschieben zu können, um eine für den jeweiligen Anwendungsfall passende Relativlage zwischen Filtermedium und Tragrahmen einstellen zu können. Anschließend kann der Tragrahmen in der eingestellten Position am Filtermedium fixiert werden. Beispielsweise kann der Tragrahmen im Bereich einer Anströmseite oder im Bereich einer Abströmseite oder an einer anderen beliebigen Position zwischen Anströmseite und Abströmseite am Filtermedium positioniert und fixiert werden.

Besonders vorteilhaft ist es gemäß der Erfindung dabei, den Tragrahmen am Filtermedium anzukleben. Derartige Klebverbindungen lassen sich gasdicht ausführen. Ebenso lassen sie sich vergleichsweise schnell realisieren, insbesondere bei einer Verwendung von Hotmelt als Klebstoff.

Die Dichtung kann bezüglich des Tragrahmens ein separat hergestelltes Bauteil sein und dementsprechend auf geeignete Weise an den Tragrahmen angebaut sein. Beispielsweise kann die Dichtung mit dem Tragrahmen verclipst oder verknüpft sein. Ferner ist eine formschlüssige Anbindung möglich. Am Tragrahmen kann eine Dichtungsaufnahme ausgebildet sein, in welche die Dichtung eingelegt sein kann. Zusätzlich oder alternativ kann die Dichtung mit dem Tragrahmen verschweißt, verklebt oder plastifiziert sein.

Alternativ ist es ebenso möglich, die Dichtung an den Tragrahmen anzugießen oder anzuspritzen, vorzugsweise mittels Zwei-Komponenten-Technik oder 2K-Technik.

Beim Filtermedium handelt es sich um ein gefaltetes Bahnenmaterial, das quer zu seinen Falten zwei gegenüberliegende Seitenstreifen aufweist, die das Bahnenmaterial seitlich dicht einfassen. Beispielsweise können diese Seitenstreifen mit dem Bahnenmaterial verklebt, verschweißt oder plastifiziert sein. Der Tragrahmen ist nun am Filtermedium so angebracht, dass er an den Seitenstreifen und an voneinander abgewandten Endabschnitten des Bahnenmaterials zur Anlage kommt. Hierdurch bildet der Tragrahmen eine vollständig umlaufende, quer zur Durchströmungsrichtung des Filtermediums verlaufende seitliche Einfassung des Filtermediums.

Erfindungsgemäß ist die vorstehend genannte Dichtung von den Seitenstreifen und vom Bahnenmaterial beabstandet an einem vom Filtermedium weggerichteten Tragabschnitt des Tragrahmens angeordnet.

Die Seitenstreifen und die Endabschnitte des Bahnenmaterials erstrecken sich zweckmäßig parallel zur Durchströmungsrichtung des Filtermediums, wodurch es im Rahmen der Herstellung des Filterelements möglich ist, den Tragrahmen parallel zu dieser Strömungsrichtung, entlang der Seitenstreifen und entlang der Endabschnitte zu verschieben, um die gewünschte Positionierung durchzuführen. Zweckmäßig stehen die Endabschnitte und die Seitenstreifen senkrecht aufeinander, wodurch das Filtermedium insgesamt eine Rechteckform erhält. Dementsprechend besitzt auch der Tragrahmen eine Rechteckform.

Bei der Erfindung ist vorgesehen, dass der Tragrahmen an einer dem Filtermedium zugewandten Seite einen flächig am Filtermedium anliegenden Kontaktabschnitt sowie einen Klebabschnitt aufweist, wobei der Klebabschnitt vom Kontaktabschnitt ausgeht und vom Filtermaterial weggerichtet ist. Zwischen dem Klebabschnitt und dem Filtermaterial entsteht dadurch eine geschlossen umlaufende Klebnut, die zum Einbringen eines geeigneten Klebstoffs geeignet ist. Mit anderen Worten, die Klebnut nimmt den Klebstoff zum Verkleben des Tragrahmens mit dem Filtermedium auf. Die Ausbildung einer derartigen Klebnut am Tragrahmen vereinfacht die Herstellung der Klebverbindung und somit die Herstellung des Filterelements.

Die Klebnut kann im Profil V-förmig ausgestaltet sein, was die Einbringung des Klebstoffs, beispielsweise mittels einer Spritzdüse, vereinfacht. Grundsätzlich sind jedoch auch andere Profile für die Klebnut denkbar.

Eine besonders preiswerte Ausführungsform lässt sich erzielen, wenn der Tragrahmen aus einem Extrusionsprofil hergestellt ist. Zusätzlich oder alternativ kann die Dichtung aus einem Extrusionsprofil hergestellt sein. Während der extrudierte Tragrahmen bei einem rechteckigen Filtermedium zweckmäßig aus vier auf Gehrung geschnittenen und miteinander verbundenen extrudierten Tragrahmenabschnitten zusammengebaut ist, kann die Dichtung in einem Stück umlaufend angeordnet und lediglich an ihren Enden auf Stoß angeordnet und miteinander verbunden sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine isometrische Ansicht eines Filterelements,
- Fig. 2: eine isometrische Ansicht eines Eckbereichs des Filterelements,
- Fig. 3: einen Längsschnitt des Filterelements im Bereich eines Tragrahmens,
- Fig. 4-10: Querschnitte wie in Fig. 3, jedoch bei anderen Ausführungsformen,
- Figur 11: eine isometrische Ansicht eines alternativen Filterelements, das nicht unter den Schutzbereich der Ansprüche fällt.

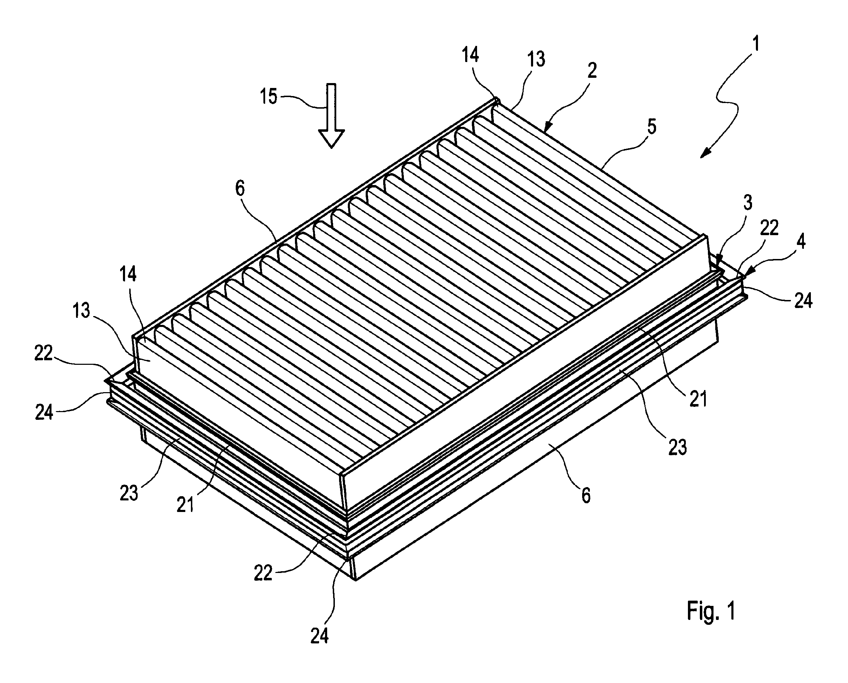

Entsprechend den Fig. 1-11 umfasst ein Filterelement 1, das sich bevorzugt zum Filtern von Gas eignet, ein Filtermedium 2, einen Tragrahmen 3 und eine Dichtung 4. Das Filterelement 1 dient bevorzugt zum Filtern von Luft. Dabei kann es in einer Frischluftanlage einer Brennkraftmaschine, die sich beispielsweise in einem Kraftfahrzeug befindet, zur Anwendung kommen. Ebenso kann es in einem Frischluftkanal angeordnet sein, über den einem Fahrzeuginnenraum Frischluft zugeführt wird. Insbesondere handelt es sich beim Filterelement 1 somit um ein Frischluftfilterelement 1 für eine Fahrzeuganwendung.

Beim Filtermedium 2 handelt es sich bei der hier gezeigten bevorzugten Ausführungsform um ein gefaltetes Bahnenmaterial 5, das quer zur Längsrichtung seiner Falten mit zwei Seitenstreifen 6 seitlich eingefasst ist. Diese Seitenstreifen 6 können grundsätzlich aus dem gleichen Werkstoff hergestellt sein wie das Bahnenmaterial 5. Zweckmäßig sind die Seitenstreifen 6 gasdicht am Bahnenmaterial 5 angebracht, insbesondere damit verklebt oder verschweißt oder plastifiziert. Das Bahnenmaterial 5 und die Seitenstreifen 6 bestehen vorzugsweise aus einem üblichen Filtermaterial, wie zum Beispiel Vlies.

Der Tragrahmen 3 ist am Filtermedium 2 geschlossen umlaufend angeordnet, so dass er eine seitliche Einfassung bildet, die gegenüber dem Filtermedium 2 abgedichtet ist. Die Dichtung 4 ist am Tragrahmen 3 angeordnet und ist bezüglich des Tragrahmens 3 und somit auch bezüglich des Filtermediums 2 ebenfalls geschlossen umlaufend angeordnet, so dass auch die Dichtung 4 eine seitliche Einfassung für den Tragrahmen 3 und somit auch für das Filtermedium 2 bildet.

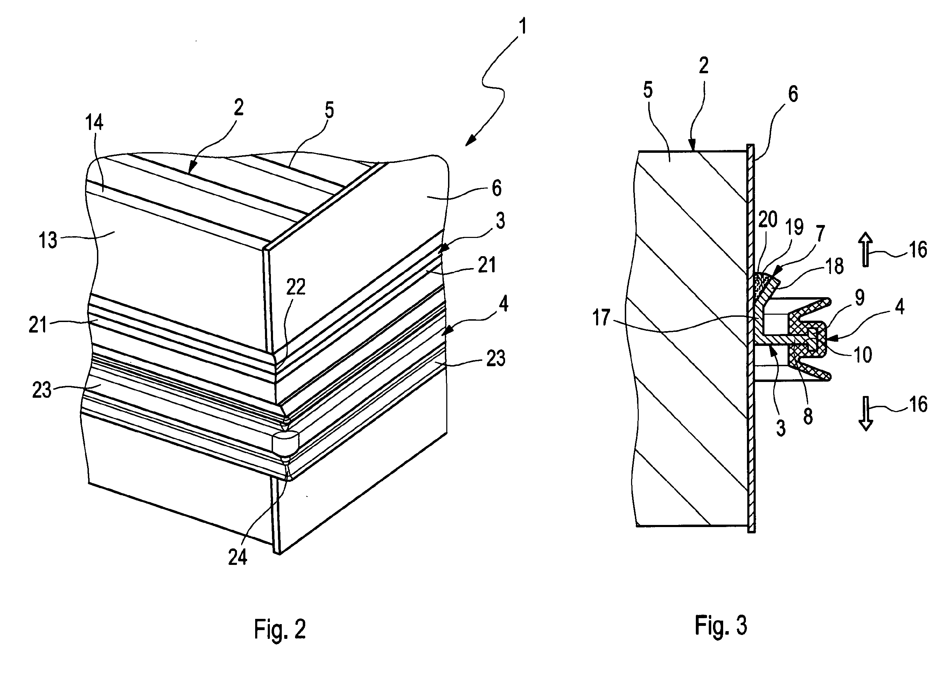

Beim hier vorgestellten Filterelement 1 ist der Tragrahmen 3 bezüglich des Filtermediums 2 ein separat hergestelltes Bauteil. Dementsprechend ist der Tragrahmen 3 an das Filtermedium 2 angebaut. Bevorzugt wird zur festen und dichten Verbindung zwischen Tragrahmen 3 und Filtermedium 2 eine Klebverbindung verwendet, die in den Figuren 3-10 mit 7 bezeichnet ist. Die Klebverbindung 7 ist vorzugsweise geschlossen umlaufend ausgestaltet, was die Realisierung einer gasdichten Verbindung zwischen Tragrahmen 3 und Filtermedium 2 vereinfacht.

Bei der Dichtung 4 kann es sich bezüglich des Tragrahmens 3 um ein separat hergestelltes Bauteil handeln, das auf geeignete Weise an den Tragrahmen 3 angebaut ist. Beispielsweise zeigen die Figuren 3, 4 und 8 je eine Ausführungsform, bei welcher die Dichtung 4 mit dem Tragrahmen 3 verclipst ist, insbesondere ist die Dichtung 4 an den Tragrahmen 3 angeknüpft. Hierzu kann der Tragrahmen 3 im Profil einen Tragabschnitt 8 aufweisen, der vom Filtermedium 2 nach außen absteht und an seinem freien Ende einen Halteabschnitt 9 trägt, der gegenüber dem Tragabschnitt 8 seitlich absteht und einen vergrößerten Querschnitt aufweist. Die jeweilige Dichtung 4 ist komplementär zu diesem Endabschnitt bzw. zum Halteabschnitt 9 des Tragabschnitts 8 geformt und besitzt insbesondere eine dazu komplementäre Aufnahmenut 10. Die Elastizität des Dichtungsmaterials der Dichtung 4 ermöglicht es, die Dichtung 4 so auf den Tragrahmen 3 aufzustecken bzw. damit zu verknüpfen, dass der Endabschnitt des Tragabschnitts 8 mit dem Halteabschnitt 9 in die Aufnahmenut 10 eindringt. Dabei umschließt die Dichtung 4 den Halteabschnitt 9 formschlüssig. Letztlich ist die Dichtung 4 durch Formschluss am Tragrahmen 3 festgelegt. Zusätzlich kann eine Verklebung vorgesehen sein, was jedoch nicht erforderlich ist.

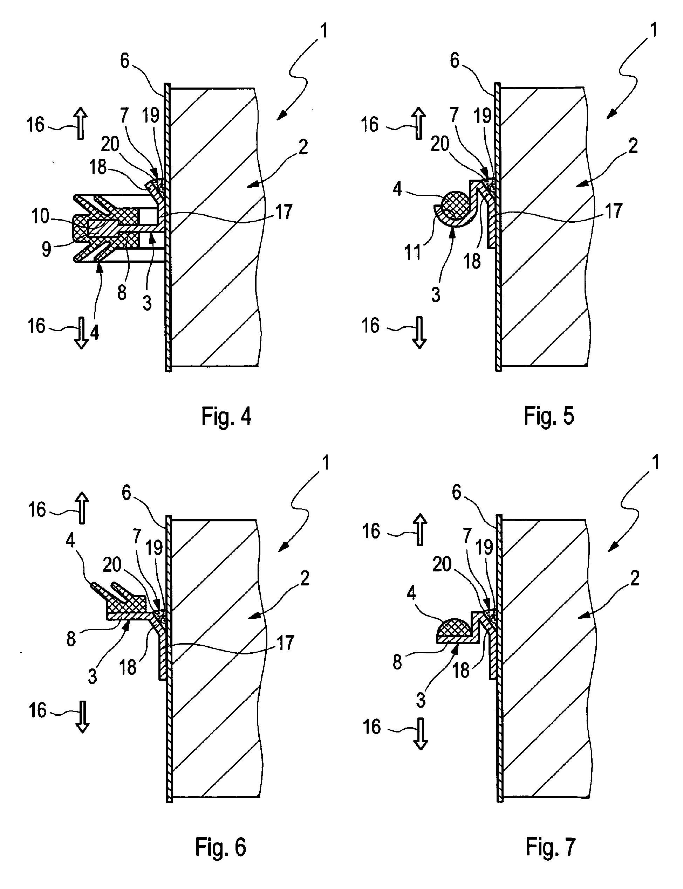

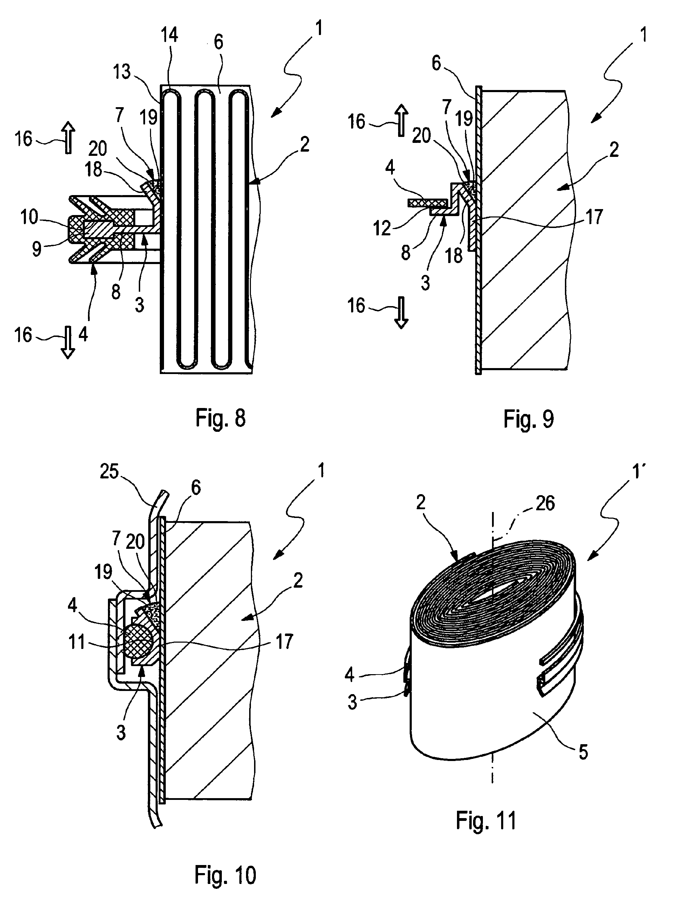

Im Unterschied dazu zeigen die Figuren 5 und 10 Ausführungsformen, bei denen der Tragrahmen 3 jeweils eine komplementär zur Dichtung 4 geformte Dichtungsaufnahme 11 aufweist, in welche die Dichtung 4 eingelegt ist. Dabei kann die Dichtung 4 in die jeweilige Dichtungsaufnahme 11 lose eingelegt sein und lediglich durch die Elastizität des Dichtungsmaterials in der Dichtungsaufnahme 11 vorgespannt anliegen und dadurch lagefixiert sein. Beispielsweise ist bei diesen Ausführungsformen die Dichtung 4 mit einem Kreisprofil versehen, während die Dichtungsaufnahme 11 einen dazu passenden halbkreisförmigen Aufnahmequerschnitt besitzt.

Fig. 9 zeigt eine Ausführungsform, bei welcher die Dichtung 4 über eine Schweißverbindung 12 mit dem Tragrahmen 3 verbunden ist. Insbesondere ist die Dichtung 4 dabei wieder an einen Tragabschnitt 8 im Profil des Tragrahmens 3 angebaut. Anstelle einer derartigen Schweißverbindung 12 kann bei einer anderen Ausführungsform auch eine Klebverbindung oder eine Verbindung durch Plastifizierung realisiert werden.

Gemäß den Figuren 6 und 7 ist es ebenso möglich, die Dichtung 4 an den Tragrahmen 3 anzuspritzen oder anzugießen, wobei dies vorzugsweise mittels Zwei-Komponenten-Technik oder kurz 2K-Technik realisierbar ist. Beispielsweise kann gemäß Fig. 6 eine komplex profilierte Dichtung 4 an den Tragrahmen 3 angespritzt werden. Gemäß Fig. 7 kann eine einfach geformte Dichtung 4 an den Tragrahmen 3 angegossen werden.

Entsprechend den Figuren 1 und 2 besitzt das Filtermedium 2 die beiden Seitenstreifen 6, die sich gegenüberliegen, um das Bahnenmaterial 5 quer zu dessen Falten seitlich dicht einzufassen. Der Tragrahmen 3 und die Dichtung 4 sind in diesem Fall seitlich so angeordnet, dass sie sich an der Außenseite des Filtermediums 2 entlang der beiden Seitenstreifen 6 sowie entlang von zwei voneinander abgewandten Endabschnitten 13 des Bahnenmaterials 5 erstrecken. Diese Endabschnitte 13 erstrecken sich vorzugsweise über die gesamte Höhe der Seitenstreifen 6 und sind über die jeweils letzte Falte 14 oder Endfalte 14 des gefalteten Bahnenmaterials 5 mit dem übrigen Bahnenmaterial 5 verbunden. Diese Endabschnitte 13 erstrecken sich wie auch die Seitenstreifen 6 parallel zu einer Hauptdurchströmungsrichtung 15 des Filterelements 1. Der Tragrahmen 3 kommt bei dieser Ausführungsform an den beiden Seitenstreifen 6 und an den beiden Endabschnitten 13 jeweils von außen zur Anlage.

Bei einer anderen Ausführungsform kann im Bereich der Endabschnitte 13 je ein weiterer Seitenstreifen 6 angeordnet sein, der dicht und fest mit dem jeweiligen Endabschnitt 13 verbunden ist. Insbesondere kann dann auch vorgesehen sein, einen einzigen Seitenstreifen 6 zu verwenden, der entlang des Bahnenmaterials 5 geschlossen umläuft und an seinen Enden aneinander stößt und an diesen Stoßkanten gegebenenfalls verbunden ist. Bei einer derartigen Ausführungsform liegt der Tragrahmen 3 dann ausschließlich an dem einen Seitenstreifen 6 bzw. bei mehreren Seitenstreifen 6 an diesen Seitenstreifen 6 an.

Gemäß den hier gezeigten, bevorzugten Ausführungsformen erstrecken sich die Seitenstreifen 6 sowie gegebenenfalls die Endabschnitte 13 parallel zur Hauptströmungsrichtung 15, wodurch das Filtermedium 2 quer zur Hauptströmungsrichtung 15 ein Außenprofil bzw. eine Außenkontur besitzt, die parallel zur Hauptströmungsrichtung 15 konstant ist. Hierdurch ist es im Rahmen der Herstellung des Filterelements 1 möglich, den Tragrahmen 3 parallel zur Hauptströmungsrichtung 15 relativ zum Filtermedium 2 zu verstellen, was zum Beispiel in Fig. 3 durch Pfeile 16 angedeutet ist. Somit ist es im Rahmen der Herstellung des Filterelements 1 möglich, eine gewünschte Relativlage zwischen Tragrahmen 3 und Filtermedium 2 einzustellen. Die so aufgefundene Relativlage oder Position kann dann mit Hilfe der Klebverbindung 7 einfach fixiert werden.

Um diese Einstellbarkeit bzw. Höhenverstellbarkeit des Tragrahmens 3 relativ zum Filtermedium 2 zu verbessern, kann der Tragrahmen 3 im Profil einen Kontaktabschnitt 17 aufweisen, mit dem der Tragrahmen 3 flächig am Filtermedium 2 zur Anlage kommt. Dieser Kontaktabschnitt 17 befindet sich dabei an einer dem Filtermedium 2 zugewandten Seite des Tragrahmens 3. Er ist im Profil geradlinig und parallel zur Hauptströmungsrichtung 15 ausgerichtet, so dass er sich parallel zum jeweiligen Seitenstreifen 6 bzw. zum jeweiligen Endabschnitt 13 erstreckt. Dementsprechend kann der Tragrahmen 3 entlang des Filtermediums 2 geführt verstellt werden, um die gewünschte Positionierung einstellen zu können.

Um die Klebverbindung 7 einfacher herstellen zu können, kann der Tragrahmen 3 im Profil einen Klebabschnitt 18 aufweisen. Dieser geht im Beispiel vom Kontaktabschnitt 17 aus und ist vom Filtermedium 2 weggerichtet, und zwar derart, dass zwischen dem Klebabschnitt 18 und dem Filtermedium 2 eine Klebnut 19 entsteht, die bezüglich des Filtermediums 2 geschlossen umlaufend ist. Innerhalb dieser Klebnut 19 kann die Klebverbindung 7 hergestellt werden, indem ein geeigneter Klebstoff 20 in die Klebnut 19 eingebracht wird. Bei den hier gezeigten Beispielen ist die Klebnut 19 im Profil V-förmig ausgestaltet, was beispielsweise für eine automatisierte Herstellung der Klebverbindung 7 vorteilhaft sein kann.

Der Tragrahmen 3 kann aus einem Extrusionsprofil hergestellt sein. Beim hier gezeigten, in einem quer zur Hauptströmungsrichtung 15 verlaufenden Querschnitt rechteckigen Filtermedium 2 werden zum Herstellen des umlaufenden Tragrahmens 3 insgesamt vier Tragrahmenabschnitte 21 verwendet, die sich jeweils entlang einer der vier Seiten außen entlang des Filtermediums 2 erstrecken. Die vier Tragrahmenabschnitte 21 sind auf Gehrung geschnitten bzw. stoßen in Gehrungen aufeinander. In diesen Eckstößen oder Gehrungen, die in den Figuren 1 und 2 mit 22 bezeichnet sind, sind die einzelnen Tragrahmenabschnitte 21 auf geeignete Weise miteinander verbunden, beispielsweise miteinander verklebt oder verschweißt.

Des Weiteren kann die Dichtung 4 aus einem Extrusionsprofil hergestellt sein. Je nach Dichtungsmaterial ist es dabei ebenfalls möglich, beim rechteckigen Filterelement 1 vier Dichtungsabschnitte 23 zum Aufbauen der Dichtung 4 zu verwenden. Diese Dichtungsabschnitte 23 können ebenfalls in den Ecken auf Gehrung geschnitten sein. Diese Gehrungen bzw. Eckstöße sind in den Figuren 1 und 2 mit 24 bezeichnet. Im Bereich dieser Eckstöße 24 bzw. der Gehrungen 24 können die einzelnen Dichtungsabschnitte 23 auf geeignete Weise miteinander dicht verbunden sein, insbesondere miteinander verklebt oder verschweißt sein.

Alternativ ist es bei einem geeigneten Dichtungsmaterial ebenso möglich, die extrudierte Dichtung 4 in einem Stück um den Tragrahmen 4 herumzulegen und die Enden der Dichtung 4 über einen Stoß aneinander angrenzen zu lassen. In diesem Stoß können die Dichtungsenden miteinander verbunden sein, insbesondere mittels einer Verklebung oder Verschweißung.

Ein Verfahren zum Herstellen eines derartigen Filterelements 1 kann beispielsweise wie folgt ablaufen:

Zunächst wird der Tragrahmen 3 entlang des Filtermediums 2 parallel zur Hauptdurchströmungsrichtung 15 höhenverstellt, also entsprechend den Pfeilen 16 entlang des Filtermediums 2 verstellt. Hierdurch kann relativ zum Filtermedium 2 eine vorbestimmte Höhe oder Position eingestellt werden. Anschließend kann der Tragrahmen 3 in der eingestellten Höhe am Filtermedium 2 fixiert werden. Dies erfolgt zweckmäßig durch die Verklebung 7. Durch die Justierbarkeit des Tragrahmens 3 bezüglich des Filtermediums 2 ist es möglich, das Filterelement 1 während seiner Herstellung an unterschiedliche Einbausituationen anzupassen, die in unterschiedlichen Filtergehäusen auftreten können. Ein derartiges Filtergehäuse ist rein exemplarisch in Fig. 10 angedeutet und mit 25 bezeichnet.

Die Dichtung 4 kann während der Positionierung des Tragrahmens 3 relativ zum Filtermedium 2 bereits am Tragrahmen 3 angebracht sein. Ebenso ist es möglich, die Dichtung 4 erst dann am Tragrahmen 3 anzubringen, wenn der Tragrahmen 3 am Filtermedium 2 fixiert ist.

Gemäß Fig. 11 kann das Filterelement 1' bei einer anderen Ausführungsform als Wickelfilter 1' ausgestaltet sein. In Figur 11 ist ein oval ausgestaltetes Filterelement 1' in isometrischer Darstellung gezeigt. Alternativ zu der Ovalform kann das Filterelement 1' auch über jeden beliebigen anderen Querschnitt verfügen. Insbesondere kann das Filterelement 1' auch rund, insbesondere zylindrisch bzw. kreiszylindrisch ausgebildet sein. Das Filterelement 1' verfügt über ein spiralförmig aufgewickeltes Filtermedium 2, insbesondere aus einem Bahnenmaterial 5' In dem Filtermedium 2 sind axial verlaufende Kanäle angeordnet, welche wechselseitig verschlossen sind. Somit ist eine Stirnseite des Filterelementes 1' als Anströmseite und die gegenüberliegende Stirnseite als Abströmseite ausgebildet. Am Außenumfang des Filterelementes 1' ist der Tragrahmen 3, welcher das Filtermedium 2 umlaufend umschließt, fest mit dem Filtermedium 2 verbunden. Der Tragrahmen 3 ist dabei koaxial zu einer Wickelachse 26 ausgerichtet, um die das Bahnenmaterial 5' gewickelt ist. Auf dem Tragrahmen 3 ist die ebenfalls umlaufende Dichtung 4 angeordnet. Bei dem dargestellten Filterelement 1' sind der Tragrahmen 3 und die Dichtung 4 im Schnitt dargestellt. Die vorangehend beschriebenen Ausgestaltungen des Tragrahmens 3 und der Dichtung 4 können selbstverständlich auch auf dieses gewickelte Filterelement 1' übertragen werden.

## Patentansprüche

1. Filterelement, Insbesondere zum Filtern von Gasen,
- mit einem Filtermedium (2),
- mit einem Tragrahmen (3), der das Filtermedium (2) geschlossen umlaufend seitlich dicht einfasst,
- mit einer Dichtung (4), die am Tragrahmen (3) angeordnet ist und das Filtermedium (2) geschlossen umlaufend seitlich einfasst,
- wobei der Tragrahmen (3) bezüglich des Filtermediums (2) ein separat hergestelltes Bauteil ist und an das Filtermedium (2) angeklebt ist,
- wobei der Tragrahmen (3) auschließlich zwischen einer Anströmseite und einer Abströmseite des Filtermediums (2) positioniert ist,
- wobei der Tragrahmen (3) in der Hauptdurchströmungsrichtung (15) des Filtermediums (2) sowohl zur Anströmseite als auch zur Abströmseite beabstandet positioniert ist,
- wobei das Filtermedium (2) ein gefaltetes Bahnenmaterial (5) aufweist,
- wobei das Filtermedium (2) quer zu den Falten des Bahnenmaterials (5) zwei gegenüberliegende Seitenstreifen (6) aufweist, die das Bahnenmaterial (5) seitlich einfassen,
- wobei der Tragrahmen (3) an voneinander abgewandten Endabschnitten (13) des Bahnenmaterials (5) und an den Seitenstreifen (6) anliegt,
- wobei der Tragrahmen (3) an einer dem Filtermedium (2) zugewandten Seite einen flächig am Filtermedium (2) anliegenden Kontaktabschnitt (17) aufweist,
- wobei der Tragrahmen (3) einen vom Kontaktabschnitt (17) ausgehenden, vom Filtermedium (2) weggerichteten Klebabschnitt (18) aufweist, derart, dass zwischen dem Klebabschnitt (18) und dem Filtermedium (2) eine geschlossen umlaufende Klebnut (19) entsteht, die zum Verkleben des Tragrahmens (3) Klebstoff (20) aufnimmt,
- wobei die Dichtung (4) von den Seitenstreifen (6) und vom Bahnenmaterial (5) beabstandet an einem vom Filtermedium (2) weggerichteten Tragabschnitt (8) des Tragrahmens (3) angeordnet ist.

2. Filterelement nach Anspruch 1,
**dadurch gekennzeichnet,**
**dass** der Tragrahmen (3) mit Hotmelt an das Filtermedium (2) angeklebt ist

3. Filterelement nach Anspruch 1 oder 2,
**dadurch gekennzeichnet,**
**dass** die Dichtung (4) bezüglich des Tragrahmens (3) ein separat hergestelltes Bauteil ist und an den Tragrahmen (3) angebaut ist.

4. Filterelement nach Anspruch 3,
**dadurch gekennzeichnet,**
- **dass** die Dichtung (4) mit dem Tragrahmen (3) verclipst insbesondere verknüpft, ist, und/oder
- **dass** die Dichtung (4) durch Formschluss am Tragrahmen (3) festgelegt ist, und/oder
- **dass** die Dichtung (4) in eine komplementär zur Dichtung (4) geformte, am Tragrahmen (3) ausgebildete Dichtungsaufnahme (11) eingelegt ist, und/oder
- **dass** die Dichtung (4) mit dem Tragrahmen (3) verschweißt oder verklebt oder plastifiziert ist.

5. Filterelement nach Anspruch 1 oder 2,
**dadurch gekennzeichnet,**
**dass** die Dichtung (4) an den Tragrahmen (3) angespritzt oder angegossen ist, insbesondere mittels eines Zwei-Komponenten-Verfahrens.

6. Filterelement nach einem der Ansprüche 1 bis 5,
**dadurch gekennzeichnet,**
**dass** die Dichtung (4) als Radialdichtung ausgestaltet ist.

7. Filterelement nach einem der Ansprüche 1 bis 6,
**dadurch gekennzeichnet,**
**dass** die Klebnut (19) im Profil V-förmig ausgestaltet ist.

8. Filterelement nach einem der Ansprüche 1 bis 7,
**dadurch gekennzeichnet,**
- **dass** der Tragrahmen (3) aus einem Extrusionsprofil hergestellt ist, und/oder
- **dass** die Dichtung (4) aus einem Extrusionsprofil hergestellt ist.

9. Verfahren zum Herstellen eines Filterelements (1) nach einem der Ansprüche 1 bis 8,
- bei dem der Tragrahmen (3) entlang des Filtermediums (2) parallel zur Hauptdurchströmungsrichtung (15) des Filtermediums (2) höhenverstellt wird, um relativ zum Filtermedium (2) eine vorbestimmte Höhe einzustellen,
- bei dem der Tragrahmen (3) bei eingestellter Höhe am Filtermedium (2) fixiert wird.

## Claims

1. A filter element, in particular for filtering gases,
- with a filter medium (2),
- with a support frame (3), which laterally surrounds the entire filter medium (2) in a sealing manner,
- with a seal (4) which is arranged on the support frame (3) and laterally surrounds the entire filter medium (2),
- wherein the support frame (3) is a separately produced component with respect to the filter medium (2) and is bonded to the filter medium (2),
- wherein the support frame (3) is positioned exlusively between an onflow side and an off-flow side of the filter medium (2),
- wherein the support frame (3) is positioned in the main through-flow direction (15) of the filter medium (2) at a distance both from the onflow side and also from the off-flow side,
- wherein the filter medium (2) has a folded web material (5),
- wherein the filter medium (2) has two opposite lateral strips (6) transversely to the folds of the web material (5), which laterally surround the web material (5),
- wherein the support frame (3) lies against the lateral strips (6) at end sections (13) of the web material (5) facing away from one another,
- wherein the support frame (3) has on a side facing the filter medium (2) a contact section (17) lying flat against the filter medium (2),
- wherein the support frame (3) has an adhesion section (18) proceeding from the contact section (17), directed away from the filter medium (2), such that between the adhesion section (18) and the filter medium (2) an adhesion groove (19) is produced, encircling in a closed manner, which receives adhesive (20) for the bonding of the support frame (3),
- wherein the seal (4) is arranged, spaced apart from the lateral strips (6) and from the web material (5), on a support section (8) of the support frame (3) directed away from the filter medium (2).

2. The filter element according to Claim 1,
**characterized in that**
the support frame (3) is bonded with hotmelt to the filter medium (2).

3. The filter element according to Claim 1 or 2,
**characterized in that**
the seal (4) is a separately produced component with respect to the support frame (3) and is attached to the support frame (3).

4. The filter element according to Claim 3,
**characterized in that**
- the seal (4) is clipped, in particular linked, to the support frame (3), and/or
- the seal (4) is secured to the support frame (3) by a form fit, and/or
- the seal (4) is inserted into a seal mount (11), shaped in a complementary manner to the seal (4), constructed on the support frame (3), and/or
- the seal (4) is welded or bonded or plasticized with the support frame (3).

5. The filter element according to Claim 1 or 2,
**characterized in that**
the seal (4) is injected or cast onto the support frame (3), in particular by means of a two-component method.

6. The filter element according to one of Claims 1 to 5,
**characterized in that**
the seal (4) is configured as a radial seal.

7. The filter element according to one of Claims 1 to 6,
**characterized in that**
the adhesion groove (19) is configured in a V shape in profile.

8. The filter element according to one of Claims 1 to 7,
**characterized in that**
- the support frame (3) is produced from an extrusion profile, and/or
- the seal (4) is produced from an extrusion profile.

9. A method for the production of a filter element (1) according to one of Claims 1 to 8,
- in which the support frame (3) is vertically adjusted along the filter medium (2) parallel to the main through-flow direction (15) of the filter medium (2), in order to set a predetermined height relative to the filter medium (2),
- in which, with a set height on the filter medium (2), the support frame (3) is fixed.

## Revendications

1. Elément filtrant, notamment pour le filtrage de gaz,
- comportant un milieu filtrant (2),
- comportant un châssis porteur (3), qui renferme le milieu filtrant (2) de manière étanche et fermée latéralement sur la circonférence,
- comportant un joint d'étanchéité (4), qui est disposé sur le châssis porteur (3) et enserre le milieu filtrant (2) de manière fermée latéralement sur la circonférence,
- dans lequel le châssis porteur (3) est un composant fabriqué séparément par rapport au milieu filtrant (2) et est collé sur le milieu filtrant (2),
- dans lequel le châssis porteur (3) est positionné exclusivement entre un côté de flux entrant et un côté de flux sortant du milieu filtrant (2),
- dans lequel le châssis porteur (3) est positionné dans la direction d'écoulement traversant principale (15) du milieu filtrant (2) en espacement tant par rapport au côté de flux entrant qu'au côté de flux sortant,
- dans lequel le milieu filtrant (2) présente un matériau en bande (5) plié,
- dans lequel le milieu filtrant (2) présente transversalement aux plis du matériau en bande (5) deux bandes latérales (6) en vis-à-vis, qui enserrent latéralement le matériau en bande (5),
- dans lequel le châssis porteur (3) vient reposer sur les portions d'extrémité (13) du matériau en bande (5) qui se détournent l'une de l'autre et sur les bandes latérales (6),
- dans lequel le châssis porteur (3) présente sur un côté tourné vers le milieu filtrant (2) une portion de contact (17) venant reposer à plat sur le milieu filtrant (2),
- dans lequel le châssis porteur (3) présente une portion adhésive (18) partant de la portion de contact (17), s'éloignant du milieu filtrant (2), de telle sorte qu'entre la portion adhésive (18) et le milieu filtrant (2) une rainure adhésive (19) circonférentielle fermée soit produite, qui renferme un adhésif (20) afin de coller le châssis porteur (3),
- dans lequel le joint d'étanchéité (4) est disposé de manière espacée des bandes latérales (6) et du matériau en bande (5) sur une portion porteuse (8) du châssis porteur (3) s'éloignant du milieu filtrant (2).

2. Elément filtrant selon la revendication 1,
**caractérisé en ce que**
le châssis porteur (3) est collé par adhésion thermofusible au milieu filtrant (2).

3. Elément filtrant selon les revendications 1 ou 2,
**caractérisé en ce que**
le joint d'étanchéité (4) est un composant fabriqué séparément par rapport au châssis porteur (3) et est monté sur le châssis porteur (3).

4. Elément filtrant selon la revendication 3,
**caractérisé en ce que**
- le joint d'étanchéité (4) est clipsé, notamment relié, avec le châssis porteur (3), et/ou
- le joint d'étanchéité (4) est immobilisé par conjonction de forme sur le châssis porteur (3), et/ou
- le joint d'étanchéité (4) est inséré dans un réceptacle étanche (11) réalisé sur le châssis porteur (3), de forme complémentaire au joint d'étanchéité (4), et/ou
- le joint d'étanchéité (4) est soudé ou collé ou plastifié avec le châssis porteur (3).

5. Elément filtrant selon les revendications 1 ou 2,
**caractérisé en ce que**
le joint d'étanchéité (4) est coulé ou moulé par injection sur le châssis porteur (3), notamment au moyen d'un procédé à deux composants.

6. Elément filtrant selon une des revendications 1 à 5,
**caractérisé en ce que**
le joint d'étanchéité (4) est conçu comme un joint d'étanchéité radial.

7. Elément filtrant selon une des revendications 1 à 6,
**caractérisé en ce que**
la rainure adhésive (19) est conçue avec un profil en forme de V.

8. Elément filtrant selon une des revendications 1 à 7,
**caractérisé en ce que**
- le châssis porteur (3) est fabriqué à partir d'un profilé d'extrusion, et/ou
- le joint d'étanchéité (4) est fabriqué à partir d'un profilé d'extrusion.

9. Procédé de fabrication d'un élément filtrant (1) selon une des revendications 1 à 8,
- dans lequel le châssis porteur (3) est réglé en hauteur le long du milieu filtrant (2) parallèlement à la direction d'écoulement traversant principale (15) du milieu filtrant (2), afin de régler une hauteur prédéterminée relativement au milieu filtrant (2),
- dans lequel le châssis porteur (3) est fixé sur le milieu filtrant (2) quand la hauteur est réglée.
